# EUROPÄISCHE PATENTSCHRIFT

(11) **EP 1 237 269 B1**
(45) Veröffentlichungstag und Bekanntmachung des Hinweises auf die Patenterteilung: **28.01.2004**
(21) Anmeldenummer: 02002778.5
(22) Anmeldetag: 07.02.2002
(51) Int. Cl.: H02M 3/335, F21V 21/02, F21V 21/04, H02M 1/00

(54) **Schaltnetzteil**
Switched mode power supply
Alimentation à découpage

(30) Priorität: 26.02.2001 DE 10109181
(43) Veröffentlichungstag der Anmeldung: 04.09.2002
(73) Patentinhaber: Comatec s.n.c., I-06132 San Andrea delle Fratte (IT)
(72) Erfinder: Lely, Giancarlo, 06100 Perugia (IT)
(74) Vertreter: Manitz, Finsterwald & Partner GbR

(56) Entgegenhaltungen:
- EP-A- 0 810 401
- DE-U- 20 009 633
- DE-U- 20 021 735
- US-B1- 6 176 594

## Beschreibung

Die vorliegende Erfindung betrifft ein Schaltnetzteil zur Bereitstellung einer stabilisierten Gleichspannung und insbesondere eine stabilisierte Mikro-Stromversorgung für elektrische und elektronische Geräte.

Schaltnetzteile und insbesondere Einbau-Schaltnetzteile sind grundsätzlich bekannt und dienen dazu, eine stabilisierte Gleichspannung aus einer Netzspannung abzuleiten, um beispielsweise Meßwertgeber zu versorgen.

Insbesondere wenn beispielsweise Kleinkameras, Alarmsensoren, Rauchmelder, Rollladen-, Jalousien oder Dachfensterantriebe mit Niederspannung versorgt werden müssen, mußte bislang eine zusätzliche Leitung gelegt werden, die - falls sie in den gleichen Kabelkanal der Hauptleitung gelegt wird - den gleichen Isolationsgrad wie die Hauptleitung aufweisen muß. Alternativ kann eine Standardstromversorgung zum Einbau oder zur Wandmontage in der Nähe des zu versorgenden Gerätes montiert werden oder es muß ein neuer Kabelkanal für die Kabel der stabilisierten Niederspannung bis zu dem zu speisenden Gerät gelegt werden.

Das Einführen mehrerer Kabel in einen Kabelkanal kann zu Platzproblemen im Kabelkanal führen und es kann insbesondere beim späteren Einführen von Kabeln in einen schon gelegten Kabelkanal zu unüberwindbaren Problemen kommen. Hinzu kommt, daß die Stromversorgungen der herkömmlichen Art verhältnismäßig groß sind, einen niedrigen Wirkungsgrad, jedoch eine hohe Temperaturabgabe aufweisen.

Es ist die Aufgabe der Erfindung, ein Einbau-Schaltnetzteil zur Verfügung zu stellen, das die o.g. Probleme beseitigt und dennoch eine vergleichsweise hohe Leistung aufweist.

Die Lösung dieser Aufgabe erfolgt durch die Merkmale des Anspruchs 1 und insbesondere durch ein Einbau-Schaltnetzteil mit einer Eingangsspannung von etwa 90 bis 260 V (Wechselspannung), einer maximalen Ausgangsspannung von etwa 50 V (Gleichspannung) und einer maximalen Leistung von etwa 15 W, wobei die elektronischen Bauteile des Schaltnetzteiles in einem weitgehend geschlossenen Gehäuse angeordnet sind, dessen Umfangskontur derart gestaltet ist, daß es in einen Kreiszylinder mit einem Durchmesser von 55 mm und einer Höhe von etwa 35 mm einbeschrieben werden kann.

Das erfindungsgemäße Schaltnetzteil zeichnet sich dadurch aus, daß einerseits eine vergleichsweise hohe Leistungsgrenze von etwa 15 W vorliegt, wobei andererseits die Außenabmessungen des Schaltnetzteiles sehr gering sind. Die Außenkontur des Gehäuses ist so gewählt, daß bestimmte Maximalabmessungen nicht überschritten werden. Dies bringt den großen Vorteil mit sich, daß das erfindungsgemäße Schaltnetzteil einschließlich seines Gehäuses in jeder handelsüblichen Unterputzdose eingesetzt werden kann.

Vorteilhafte Ausführungsformen der Erfindung sind in der Beschreibung, der Zeichnung, sowie den Unteransprüchen beschrieben.

Nach einer ersten vorteilhaften Ausführungsform kann das Gehäuse in Draufsicht die Form eines regelmäßigen Achtecks aufweisen, das insbesondere eine Kantenlänge von etwa 21 mm besitzt. Durch eine solche achteckige Form ist der Einbau des Schaltnetzteiles in eine handelsübliche Schalterdose erleichtert, wobei die achteckige Form einen äußerst leichten Zugang zu den Eingangs- bzw. Ausgangsklemmen erlaubt.

Nach einer weiteren vorteilhaften Ausführungsform kann das Gehäuse zweiteilig ausgebildet sein, wobei die beiden Teile insbesondere durch Ultraschallschweißen oder durch Kleben unlösbar miteinander verbunden sein können. Eine solche zweiteilige Ausbildung des Gehäuses bietet eine einfache Montage und einen guten Schutz der im Gehäuseinneren angeordneten elektronischen Bauteile, ohne daß es erforderlich ist, das Gehäuseinnere mit einer Vergußmasse zu vergießen. Das Gehäuse kann bevorzugt aus glasfaserverstärktem Kunststoff hergestellt sein, was einen temperaturbeständigen Dauerbetrieb ermöglicht. Auch bei einem länger andauernden Überlastbetrieb ist hierbei sichergestellt, daß das Gehäuse seine Schutzfunktion übernimmt.

Es ist vorteilhaft, wenn das Gehäuse mit Ausnahme von Durchtrittsöffnungen für Kabel und deren Befestigungswerkzeuge geschlossen ist, da in diesem Fall kein unerwünschter Zugriff auf spannungsführende Teile möglich ist.

Nach einer bevorzugten Ausführungsform weist das Schaltnetzteil einen Miniaturtransformator auf, dessen Sekundärwicklung mit einem Draht gewickelt ist, der mit drei übereinander angeordneten Isolationsschichten versehen ist. Der Draht kann vorzugsweise einen Durchmesser von etwa 0,4 mm aufweisen. Durch die Verwendung eines solchen dreifach isolierten Drahtes auf der Sekundärseite kann eine optimale Ausnutzung des Wickelraumes erreicht werden, wobei dennoch die von den Sicherheitsnormen vorgegebenen Luft- und Kriechstrecken eingehalten werden können. Gleichzeitig läßt sich ein relativ hoher Leistungsbereich bis etwa 15 W abdecken.

Aufgrund der sehr kleinen Abmessungen ist grundsätzlich die galvanische Trennung zwischen Primärseite und Sekundärseite problematisch. Erfindungsgemäß sind jedoch an der Trennstelle zwischen Primärseite und Sekundärseite lediglich ein Transformator, ein Optokoppler und ein Koppelkondensator vorgesehen, so daß die erforderlichen Luft- und Kriechstrecken trotz der sehr geringen Abmessungen und ohne Vergießen der elektronischen Bauteile eingehalten werden können.

Bevorzugt wird für das Schaltnetzteil ein Schalt- und Regelkreis verwendet, der nach dem Sperrwandler-Prinzip arbeitet und einen integrierten MOS-FET aufweist, der als Schalterelement fungiert. Die Kontrolleinheit kann den MOS-FET mit einer Frequenz von 50 bis 500 kHz schalten und damit den Ausgangsstrom und die Ausgangsspannung unabhängig von Schwankungen der Eingangsspannung regeln.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine perspektivische Ansicht des Einbau-Schaltnetzteils bei geschlossenem Gehäuse;
- Fig. 2: eine Explosionsdarstellung des Schaltnetzteils von Fig. 1; und
- Fig. 3: den Schaltplan des Schaltnetzteils von Fig. 1 und 2.

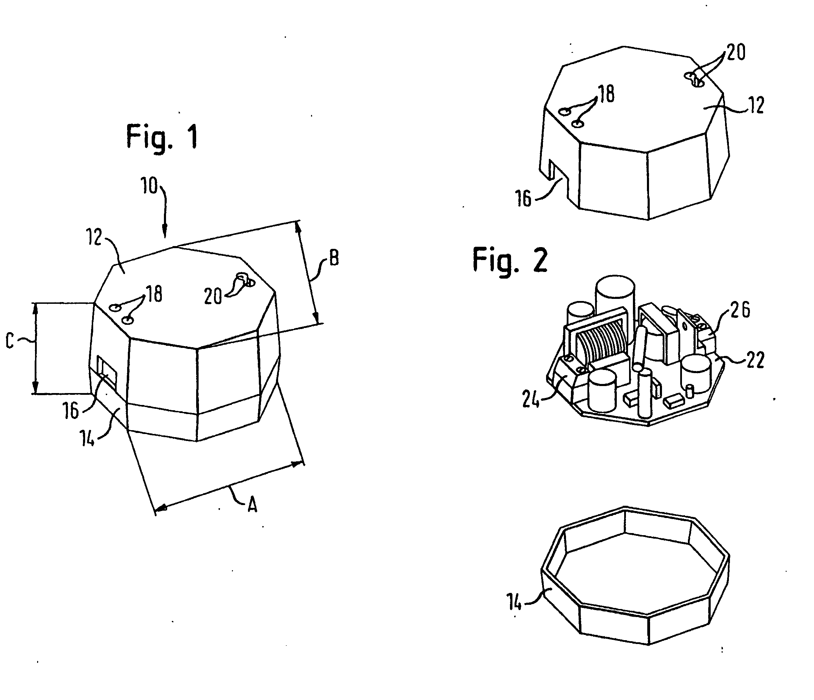

Fig. 1 zeigt eine perspektivische Ansicht eines Einbau-Schaltnetzteils, das in einem weitgehend geschlossenen Gehäuse 10 angeordnet ist, dessen Umfangskontur derart gestaltet ist, daß es in einen Kreiszylinder mit einem Durchmesser von 55 mm und einer Höhe von etwa 35 mm einbeschrieben werden kann. Bei dem dargestellten Ausführungsbeispiel ist das Gehäuse in Draufsicht in Form eines regelmäßigen Achtecks ausgebildet, das eine Kantenlänge von etwa 21 mm besitzt. Die in Fig. 1 dargestellten Maße betragen A = 50,81 mm, B = 55 mm und C = 32 mm.

Wie Fig. 1 zeigt, besteht das Gehäuse aus einem Oberteil 12 und einem Unterteil 14, die aufeinander aufgesetzt und miteinander unlösbar verbunden sind. Das Gehäuse 10 ist weitgehend geschlossen angeordnet und weist lediglich zwei Durchtrittsöffnungen 16 für Kabelanschlüsse (in Fig. 1 ist nur eine Durchtrittsöffnung zu sehen) sowie Durchtrittsöffnungen 18, 20 für die Einführung von Befestigungswerkzeugen, beispielsweise einem Schraubendreher, auf.

In Fig. 1 nicht erkennbar sind an der Innenseite des Oberteils 12 im Bereich der Durchtrittsöffnungen 18 und 20 jeweils einstückig angeformte Führungsschächte vorgesehen, die eine Führung des Befestigungswerkzeuges sicherstellen. Hierbei sind für die beabstandet ausgebildeten Durchtrittsöffnungen 18 zwei separate und voneinander isolierte Führungskanäle vorgesehen, wohingegen für die aneinander angrenzenden Durchtrittsöffnungen 20 ein einziger Führungskanal vorgesehen ist.

Fig. 2 zeigt eine Explosionsansicht des Schaltnetzteils von Fig. 1, wobei zu erkennen ist, daß im Inneren des Gehäuses 10 eine einzige Platine 22 angeordnet ist, welche die einzelnen elektronischen Bauteile sowie eine Eingangsklemme 24 und eine Ausgangsklemme 26 enthält.

Bei der Montage wird lediglich die vollständig bestückte Platine 22 in das Unterteil 14 des Gehäuses 10 eingesetzt. Anschließend wird das Oberteil 12 auf das Unterteil 14 aufgesetzt und mittels Ultraschallschweißens verschweißt. Das Gehäuse selbst besteht aus PA66 GV 25 %, d.h. aus mit Glasfaser verstärktem Polyamid. Hierdurch sind im Dauerbetrieb Innentemperaturen von 130°C problemlos möglich.

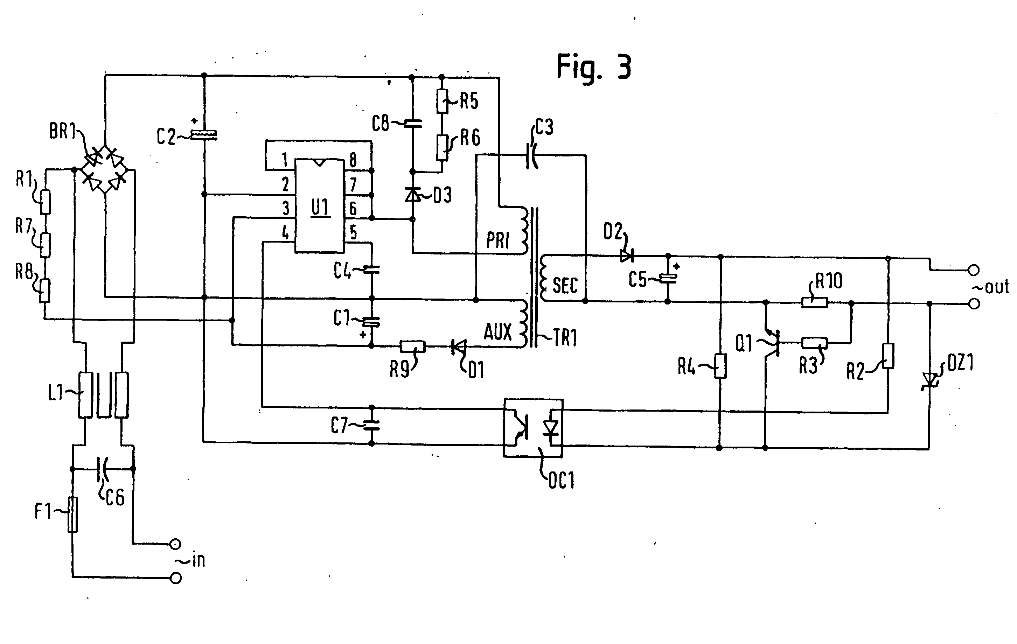

Fig. 3 zeigt die elektronische Schaltung des in den Fig. 1 und 2 dargestellten Einbau-Schaltnetzteils, das nach dem Prinzip des "flyback converter" aufgebaut ist und nach dem Sperrwandler-Prinzip arbeitet, d.h. die Leistung wird in der Sperrphase eines MOS-FET-Schalters zum Ausgang übertragen. Bei eingeschaltetem MOS-FET wird die Energie in einem Ferrit-Transformator gespeichert, um dann bei gesperrtem MOS-FET wieder an den Ausgang abgegeben zu werden. Die zeitliche Verzögerung der Übertragung wird durch die angemessene Polarität der Wicklungen und der Wellenform des Stroms im Kreislauf hervorgerufen. Die Wellenform des Stroms ist durch den Einsatz des MOS-FET-Transistors möglich, der im Schaltkreis des off-line switchers integriert ist. Dieser wird durch eine logische Kontrolleinheit gesteuert, die den MOS-FET mit einer Frequenz von 50 bis 500 kHz schaltet und dadurch den Ausgangsstrom und die Ausgangsspannung unabhängig von Schwankungen der Eingangsspannung regelt. Die Hauptaufgabe des off-line switchers liegt darin, die Schließzeit je nach Spannung, Stromnetz und Last des Transformators zu variieren, um eine konstante Ausgangsspannung zu erhalten.

Wie Fig. 3 zeigt, befindet sich ausgehend von den mit "In" bezeichneten Eingangsklemmen zunächst ein Kondensator C6 parallel zu den Eingangsklemmen, der mit einer Spule L1 als Netzfilter parallelgeschaltet ist. In der Zuleitung ist ferner eine Feinsicherung F1 vorgesehen, die nur dann wirksam wird, wenn die Elektronik des Schaltnetzteils einen Schaden erlitten hat. An den Ausgang der Spule L1 schließt sich ein Brückengleichrichter BR1 an, dessen Ausgang einerseits mit dem Anschluß 2 einer Kontroll- und Schalteinheit U1 und andererseits mit einer Primärwicklung eines Transformators TR1 verbunden ist. Der Transformator TR 1 weist eine Hilfswicklung AUX auf, die proportional zur Ausgangsspannung ein Retruaktions-Signal liefert. Dieses Signal wird von der Kontroll- und Schalteinheit U1 im Primärschaltkreis des Transformators empfangen. Hierdurch kann die vom Eingang zum Ausgang des Schaltnetzteils übertragene Energie des Transformators kontrolliert werden und die Ausgangsspannung kann bei wechselnder Eingangsspannung und wechselndem Ausgangsstrom gleichgehalten werden. Mit OC1 ist ein Optokoppler bezeichnet, der galvanisch getrennt ein Rückkoppelsignal von der Sekundärseite an die Kontroll- und Schalteinheit U1 weiterleitet.

### Bezugszeichenliste

- 10: Gehäuse
- 12: Oberteil
- 14: Unterteil
- 16: Durchtrittsöffnung
- 18, 20: Durchtrittsöffnung
- 22: Platine
- 24: Eingangsklemme
- 26: Ausgangsklemme

- A: Breite
- B: Durchmesser
- C: Höhe

- BR1: Gleichrichterbrücke
- C1-C8: Kondensatoren
- D1-D3: Dioden
- DZ1: Zener-Diode
- F1: Feinsicherung
- L 1: Netzfilter
- OC1: Optokoppler
- Q1: Transistor
- R1-R10: Widerstände
- TR1: HF-Transformator
- U1: Kontroll- und Schalteinheit

## Patentansprüche

1. Einbau-Schaltnetzteil zur Bereitstellung einer stabilisierten Gleichspannung, mit
einer Eingangsspannung von etwa 90 bis 260 V,
einer maximalen Ausgangsspannung von etwa 50 V, und
einer maximale Leistung von etwa 15 W, wobei
die elektronischen Bauteile des Schaltnetzteiles in einem weitgehend geschlossenen Gehäuse (10) angeordnet sind, dessen Umfangskontur derart gestaltet ist, daß es in einen Kreiszylinder mit einem Durchmesser von 55 mm und einer Höhe von etwa 35 mm einbeschrieben werden kann.

2. Schaltnetzteil nach Anspruch 1,
**dadurch gekennzeichnet, daß**
das Gehäuse (10) in Draufsicht die Form eines regelmäßigen Achtecks aufweist, das insbesondere eine Kantenlänge von etwa 21 mm besitzt.

3. Schaltnetzteil nach Anspruch 1,
**dadurch gekennzeichnet, daß**
das Gehäuse (10) zweiteilig ausgebildet ist, wobei die beiden Teile (12, 14), insbesondere durch Ultraschallschweißen, unlösbar miteinander verbunden sind.

4. Schaltnetzteil nach Anspruch 1,
**dadurch gekennzeichnet, daß**
das Gehäuse (10) aus glasfaserverstärktem Kunststoff besteht.

5. Schaltnetzteil nach Anspruch 1,
**dadurch gekennzeichnet, daß**
das Gehäuse (10) mit Ausnahme von Durchtrittsöffnungen (16; 18, 20) für Kabel und deren Befestigungswerkzeuge geschlossen ist.

6. Schaltnetzteil nach Anspruch 1,
**dadurch gekennzeichnet, daß**
dieses einen Miniaturtransformator (TR1) aufweist, dessen Sekundärwicklung (SEC) mit einem Draht gewickelt ist, der mit drei übereinander angeordneten Isolationsschichten versehen ist, wobei der Draht einschließlich Isolierung vorzugsweise einen Durchmesser von etwa 0,4 mm aufweist.

7. Schaltnetzteil nach Anspruch 1,
**dadurch gekennzeichnet, daß**
an der Trennstelle zwischen Primärseite und Sekundärseite lediglich ein Transformator (TR1), ein Optokoppler (OC1) und ein Koppelkondensator (C3) angeordnet sind.

8. Schaltnetzteil nach Anspruch 1,
**dadurch gekennzeichnet, daß**
als Schaltelement (U1) ein MOS-FET-Transistor vorgesehen ist.

## Claims

1. An installable power supply unit for providing a stabilised DC voltage, having
an input voltage from approximately 90 up to 260 V;
a maximum output voltage of approximately 50 V; and
a maximum power of approximately 15 W, wherein
the electronic components of the power supply unit are arranged in a largely closed housing (10) whose peripheral contour is designed such that it can be inscribed in a circular cylinder with a diameter of 55 mm and a height of approximately 35 mm.

2. A power supply unit in accordance with claim 1, **characterized in that** the housing (10) has the shape of a regular octagon in a plan view which in particular has an edge length of approximately 21 mm.

3. A power supply unit in accordance with claim 1, **characterized in that** the housing (10) is made in two parts, with the two parts (12, 14) in particular being non-releasably connected to one another by ultrasonic welding.

4. A power supply unit in accordance with claim 1, **characterized in that** the housing (10) consists of glass fibre reinforced plastic.

5. A power supply unit in accordance with claim 1, **characterized in that** the housing (10) is closed with the exception of passage openings (16, 18, 20) for cables and their fastening tools.

6. A power supply unit in accordance with claim 1, **characterized in that** it has a miniature transformer (TR1) whose secondary winding (SEC) is wound with a wire which is provided with three insulating layers arranged on top of one another, with the wire, including insulation, preferably having a diameter of approximately 0.4 mm.

7. A power supply unit in accordance with claim 1, **characterized in** only one transformer (TR1), one optoelectronic coupler (OC1) and one coupling capacitor (C3) are arranged at the separation point between the primary side and the secondary side.

8. A power supply unit in accordance with claim 1, **characterized in that** a MOSFET transistor is provided as the switching element (U1).

## Revendications

1. Alimentation à découpage intégrée pour la mise à disposition d'une tension continue stabilisée comprenant :
- une tension d'entrée d'environ 90 à 260 V ;
- une tension de sortie maximale d'environ 50 V ; et
- une puissance maximale d'environ 15 W, les composants électroniques de l'alimentation à découpage étant agencés dans un boîtier (10) en grande partie fermé, dont le contour périphérique est réalisé de manière à pouvoir s'inscrire dans un cylindre droit d'un diamètre de 55 mm et d'une hauteur d'environ 35 mm.

2. Alimentation à découpage selon la revendication 1, **caractérisée en ce que** le boîtier (10) présente en vue de dessus la forme d'un octogone régulier qui possède en particulier une longueur de côté d'environ 21 mm.

3. Alimentation à découpage selon la revendication 1, **caractérisée en ce que** le boîtier (10) est réalisé en deux parties, les deux parties (12, 14) étant reliées l'une à l'autre de manière non détachable, en particulier par soudage aux ultrasons.

4. Alimentation à découpage selon la revendication 1, **caractérisée en ce que** le boîtier (10) se compose de matière plastique renforcée par des fibres de verre.

5. Alimentation à découpage selon la revendication 1, **caractérisée en ce que** le boîtier (10) est fermé, à l'exception d'orifices de passage (16, 18, 20) pour les câbles et leurs outils de fixation.

6. Alimentation à découpage selon la revendication 1, **caractérisée en ce que** celle-ci présente un transformateur miniature (TR1) dont le bobinage secondaire (SEC) est enroulé avec un fil qui est muni de trois couches d'isolation agencées l'une sur l'autre, le fil, y compris l'isolation, présentant de préférence un diamètre d'environ 0,4 mm.

7. Alimentation à découpage selon la revendication 1, **caractérisée en ce que** seulement un transformateur (TR1), un optocoupleur (OC1) et un condensateur de couplage (C3) sont agencés à l'emplacement de séparation entre le côté primaire et le côté secondaire.

8. Alimentation à découpage selon la revendication 1, **caractérisée en ce qu'**un transistor MOS-FET est prévu comme élément de commutation (U1).
